# FASCICULE DE BREVET EUROPEEN

(11) **EP 2 925 976 B1**
(45) Date de publication et mention de la délivrance du brevet: **01.03.2017**
(21) Numéro de dépôt: 13798664.2
(22) Date de dépôt: 29.11.2013
(51) Int. Cl.: F01L 1/14, F02M 59/10

(54) **SUIVEUR DE CAME AVEC DISPOSITIF ANTI-ROTATION**
NOCKENFOLGER MIT VERDREHSICHERUNG
CAM FOLLOWER WITH ROTATION PREVENTING MEANS

(30) Priorité: 29.11.2012 FR 1203228
(43) Date de publication de la demande: 07.10.2015
(73) Titulaire: Aktiebolaget SKF, 415 50 Göteborg (SE)
(72) Inventeur: VAN DER MEI, Nijs, NL-3533 GE Utrecht (NL); HAUVESPRE, Benoît, 37230 Saint Etienne de Chigny (FR)
(74) Mandataire: Kuhstrebe, Jochen
(86) Numéro de dépôt international: PCT/EP2013/075143
(87) Numéro de publication internationale: WO 2014/083174

(56) Documents cités:
- EP-A1- 0 608 925
- EP-A1- 0 969 184
- DE-A1-102005 047 234
- DE-A1-102006 031 032
- DE-A1-102008 002 378
- FR-A1- 2 830 056
- GB-A- 2 233 418
- US-A- 3 108 580
- US-A- 3 668 945
- US-A- 5 307 769
- US-A- 5 775 275
- US-A1- 2008 190 237

## Description

La présente invention concerne les suiveurs de came comportant un poussoir avec un rouleau assurant le contact avec une came. Les suiveurs de came de ce type sont utilisés en particulier pour les pompes d'injection de carburant, les commandes de soupapes ou autres systèmes similaires dans les applications automobiles. L'invention n'est pas seulement applicable aux suiveurs de came. Une autre application de l'invention a trait à l'utilisation du dispositif pour d'autres éléments alternatifs comportant un manchon disposé dans une direction transversale à la direction du mouvement alternatif.

Dans le domaine des suiveurs de came, il est particulièrement important de s'assurer que l'axe de rotation du rouleau reste aligné avec l'axe de rotation de la came afin de maintenir un contact linéaire avec une surface de contact maximum entre le rouleau et la came.

Par conséquent, on sait qu'il faut utiliser des dispositifs anti-rotation dépassant radialement de la surface extérieure cylindrique du corps de poussoir et s'engageant par une structure d'appariement dans ledit corps extérieur.

Le document WO 2010/048968 se propose d'insérer un élément ayant sensiblement la forme d'un champignon dans un alésage ménagé dans la paroi latérale d'un poussoir alternatif de forme sensiblement cylindrique. Cet élément est conçu de manière à s'engager dans la rainure axiale de la paroi latérale d'un cylindre extérieur guidant le poussoir alternatif. De plus, on sait qu'il faut équiper le poussoir d'une rainure axiale correspondant à un élément dépassant la paroi intérieure cylindrique guidant le poussoir alternatif.

Ces deux solutions sont caractérisées en ce qu'elles présentent un élément distinct devant être monté sur le cylindre ou sur le poussoir, ce qui nécessite une étape de fabrication additionnelle. De plus, l'élément risque de se desserrer, ce qui peut endommager le dispositif utilisant le poussoir.

Le document FR 2830056A1 divulgue un suiveur de came avec poussoir comprenant un axe de rouleau dépassant radialement la surface extérieure cylindrique du corps de poussoir.

La présente invention vise à s'affranchir de ces problèmes en utilisant un suiveur de came économique, robuste et facile à fabriquer.

L'invention propose un suiveur de came comportant un poussoir destiné à exécuter un mouvement alternatif dans un corps extérieur. Le poussoir comprend un corps de poussoir présentant une surface extérieure cylindrique. Un dispositif anti-rotation est prévu, caractérisé en ce qu'il déborde radialement de la surface extérieure cylindrique du corps de poussoir. Le dispositif anti-rotation s'engage dans ledit corps extérieur par une structure d'appariement, notamment par une nervure axiale dont la longueur est supérieure à la somme de l'amplitude du mouvement alternatif et de la longueur axiale du dispositif anti-rotation.

De plus, le suiveur de came comprend un rouleau destiné à assurer le contact avec une came, et un manchon supportant à rotation le rouleau dans le corps de poussoir. Le manchon est orienté perpendiculairement à la direction du mouvement alternatif. Le corps de poussoir est pourvu au moins d'un alésage latéral et le manchon est inséré dans ledit alésage.

L'invention propose que le dispositif anti-rotation soit une extrémité dudit manchon. En utilisant l'extrémité du manchon comme dispositif anti-rotation, on évite le recours aux éléments et étapes d'assemblage additionnels généralement requis à cet effet. Il est possible d'une part de fabriquer un suiveur de came à moindre coût, et d'autre part de limiter le risque de perdre le manchon en cours de transport ou d'assemblage - ce qui, en retour, améliore la fiabilité et la sécurité du suiveur de came. Selon un mode de réalisation de l'invention, il est proposé que l'une des extrémités axiales du manchon au moins soit arrondie. Ceci est particulièrement avantageux dans le cas d'un « flottement libre », c'est à dire un manchon non fixé axialement, et permet d'éviter le frottement et l'usure des extrémités du manchon lorsqu'elles coulissent sur les parois du corps extérieur et/ou sur le fond de la rainure. Le frottement peut en outre être réduit en munissant au moins une extrémité axiale du manchon d'un revêtement anti-frottement.

Pour fixer la position axiale du manchon à
l'intérieur du corps de poussoir, il est proposé par l'invention de recourir à une déformation plastique du manchon en forme de tige, par exemple par bombage.

De plus, l'extrémité du manchon en saillie peut présenter un profil différent de celui de la partie principale du manchon. L'extrémité du manchon peut présenter un profil non circulaire, par exemple un profil en forme de rectangle ou d'ellipse susceptible d'améliorer le coulissement dans la rainure d'appariement, d'éviter les mouvements axiaux dans la direction opposée à la celle de l'extrémité en saillie, et d'éviter une rotation du manchon autour de son axe longitudinal, si désiré. En outre, l'invention se propose de munir le manchon d'une tête de boulon constituant ledit dispositif anti-rotation à l'une quelconque des fins susmentionnées.

La description suivante, nullement limitative, des modes de réalisation de l'invention, ainsi que les revendications et dessins annexés montrent les multiples caractéristiques de l'invention selon des combinaisons spécifiques. L'homme de métier pourra facilement réaliser d'autres combinaisons ou sous-combinaisons de ces caractéristiques en vue d'adapter l'invention telle que définie dans les revendications à ses besoins spécifiques.
- La figure 1: est une vue en coupe d'un suiveur de came caractérisé en ce que le manchon est en flottement libre.
- La figure 2: est une illustration du suiveur de came représenté à la figure 1.
- La figure 3: est une vue en perspective du suiveur de came représenté aux figures 1 et 2.
- La figure 4: est une vue en coupe d'un suiveur de came, caractérisé en ce que le manchon est fixé avec un circlip disposé sur la paroi intérieure d'un corps de poussoir.
- La figure 5: est une vue en coupe d'un suiveur de came caractérisé en ce que le manchon est fixé avec un circlip à l'extérieur d'un corps de poussoir.
- La figure 6: est une vue en coupe d'un suiveur de came selon un premier mode de réalisation de l'invention, caractérisé en ce que le manchon est fixé à l'aide d'une déformation plastique.
- La figure 7: est une vue en coupe d'un suiveur de came selon un deuxième mode de réalisation de l'invention, caractérisé en ce que l'extrémité du manchon présente un profil rectangulaire.
- La figure 8: est une vue en coupe d'un suiveur de came selon un troisième mode de réalisation de l'invention, caractérisé en ce que le manchon est pourvu d'une tête de boulon.

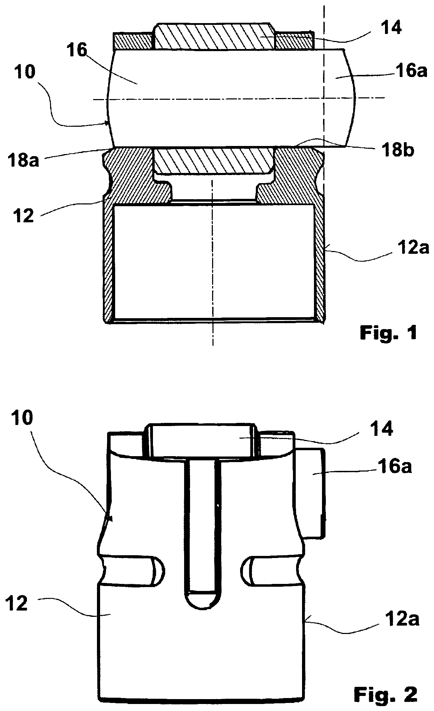

Les figures 1 - 3 sont des représentations schématiques d'un suiveur de came comportant un poussoir 10 destiné à exécuter un mouvement alternatif dans un corps extérieur (non illustré). Le poussoir 10 comprend un corps de poussoir 12 présentant une surface extérieure cylindrique 12a. Un rouleau 14 dépasse axialement le corps de poussoir 12 ; il est conçu de manière à assurer le contact avec une came, par exemple dans un moteur à combustion interne, et à être entraîné par la came afin d'exécuter un mouvement alternatif. Dans un mode de réalisation préféré, le suiveur de came est utilisé pour entraîner le piston d'une pompe d'injection de carburant dans un moteur à combustion interne. Une ouverture à l'arrière du poussoir, située à l'opposé de l'extrémité axiale où est monté le rouleau 14, est ménagée de façon à recevoir une tige de piston précontrainte par un ressort spiralé.

Le rouleau 14 est monté dans un renfoncement du corps de poussoir 12 correspondant à la forme du rouleau 14. Un fond du renfoncement est ouvert vers l'ouverture arrière afin de permettre à un lubrifiant de s'écouler vers le rouleau 14 et la came.

Un manchon 16 est monté, sa direction longitudinale étant orientée orthogonalement à la direction du mouvement alternatif, laquelle est parallèle à l'axe central de la surface extérieure 12a du corps de poussoir. Le manchon 16 est inséré dans un alésage central du rouleau 14 de façon à supporter à rotation le rouleau 14 dans le corps de poussoir 12 de telle manière que l'axe de rotation du rouleau 14 soit parallèle à l'axe de rotation de la came avec un haut degré de précision. Le rouleau 14 peut être supporté sur le manchon 16 par un palier lisse, un palier à rouleau ou un roulement à aiguilles en fonction des prérequis techniques.

Le manchon 16 est orienté perpendiculairement à la direction du mouvement alternatif. Le corps de poussoir 12 est pourvu de deux alésages latéraux 18a, 18b en regard l'un de l'autre, le manchon 16 étant inséré dans les alésages 18a, 18b. Un dispositif anti-rotation est prévu, lequel est conçu de façon à dépasser la surface extérieure cylindrique 12a du corps de poussoir 12. Le dispositif anti-rotation s'engage par une nervure axiale s'étendant sur toute la longueur de l'alésage de guidage dans le corps extérieur.

L'extrémité 16a du manchon 16 dépasse la surface extérieure cylindrique 12a ou une continuation de celle-ci, et l'invention se propose d'utiliser cette extrémité 16a comme dispositif anti-rotation. En utilisant l'extrémité 16a du manchon 16 comme dispositif anti-rotation, on évite le recours aux éléments et étapes d'assemblage additionnels généralement requis à cet effet, et il est possible de fabriquer un suiveur de came à moindre coût.

Selon le mode de réalisation des figures 1 à 3, les deux extrémités axiales du manchon 16 sont arrondies et le manchon est en « flottement libre », c'est-à-dire qu'il n'est pas fixé axialement. De plus, les extrémités axiales du manchon 16 sont pourvues d'un revêtement anti-frottement.

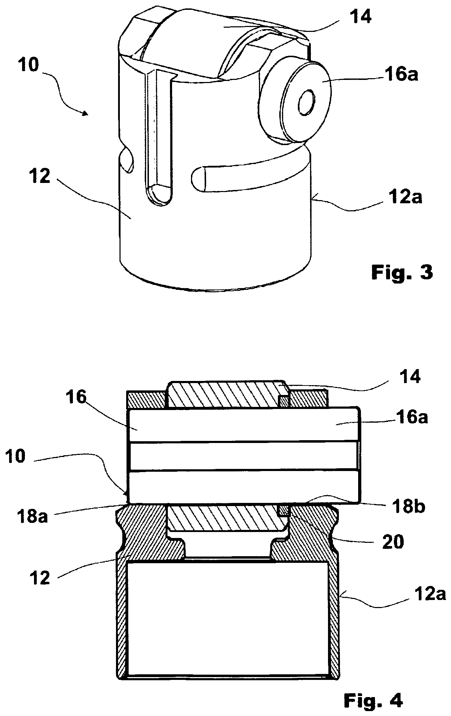

Les figures 4 à 5 montrent d'autres modes de réalisations. Pour éviter les répétitions, la description suivante mettra l'accent sur les différences entre le mode de réalisation des figures 1 à 3, le lecteur devant se rapporter à la description de la figure 1 pour les caractéristiques similaires ou identiques. Afin de
mettre en lumière le fonctionnement ou le concept commun, on utilisera des numéros de référence identiques ou similaires pour les caractéristiques présentant des fonctions identiques ou très similaires.

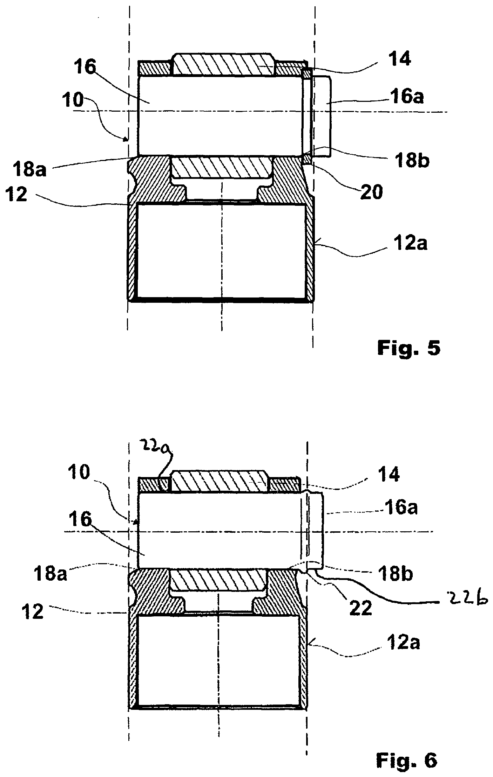

La figure 5 montre un mode de réalisation, caractérisé en
ce que le manchon 16 est fixé à l'intérieur du corps de poussoir 12 avec un circlip 20. La position du manchon 16 est fixée de sorte que les extrémités axiales n'entrent pas en contact avec les parois ou le fond de la structure d'appariement ou de la rainure, ce qui permet d'éviter l'usinage des extrémités, par arrondissement ou revêtement.

Le circlip 20 est fixé à l'extrémité 16a du manchon 16 positionné sur la paroi extérieure dudit corps de poussoir 12 jouxtant directement la paroi du corps de poussoir 12. Le circlip 20 s'engage par une rainure circonférentielle (non illustrée) dans la surface extérieure du manchon 16. Le manchon 16 présente un alésage central qui réduit son poids et simplifie son maniement lorsque les extrémités axiales sont usinées ou revêtues.

La figure 4 montre un mode de réalisation, caractérisé en ce qu'un circlip 20 est fixé au manchon 16 positionné sur la paroi intérieure dudit corps
de poussoir 12, et en particulier entre le rouleau 14 et la paroi intérieure du corps de poussoir 12, l'extrémité axiale du rouleau 14 étant munie d'une rainure destinée à recevoir le circlip 20. Le circlip 20 s'engage par une rainure circonférentielle 22 dans la surface extérieure du manchon 16.

Une autre possibilité économique pour fixer la position axiale du manchon 16 à l'intérieur du corps de poussoir 12 est de recourir à une déformation plastique 22 du manchon en forme de tige 16, par exemple par bombage. La figure 6 en est la représentation schématique. La déformation plastique 22 du manchon est réalisée sur une portion axialement intermédiaire de la surface extérieure 22a du manchon, de sorte que le manchon présente une portion en bout d'arbre 22b constituant tout ou partie du dispositif anti-rotation. Avantageusement, la déformation plastique est réalisée sur toute la circonférence de la surface extérieure 22a du manchon. Dans un autre mode de réalisation de l'invention, cette déformation plastique 22 est réalisée sur une partie circonférentielle seulement de la surface extérieure 22a du manchon, en un seul endroit ou en plusieurs. La déformation plastique 22 du manchon est en appui contre une surface extérieure du corps de poussoir, afin de positionner axialement le manchon dans le ou les alésages 18a, 18b du corps de poussoir 12.

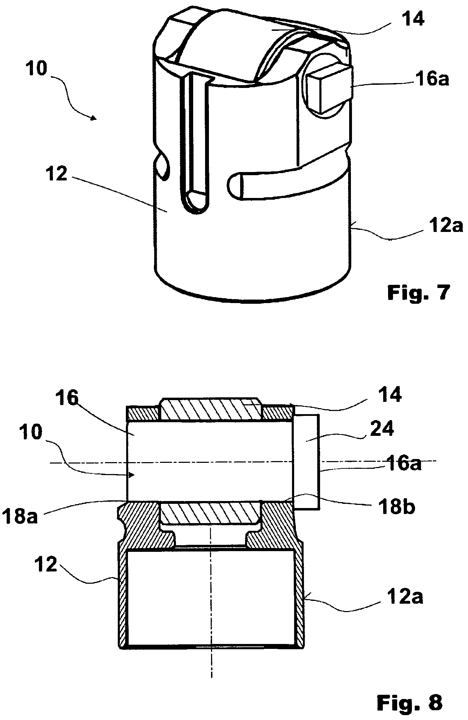

Une autre configuration possible de l'extrémité 16a du manchon 16 est représentée à la figure 7. L'extrémité présente un profil différent du profil circulaire de la partie principale du manchon 16. L'extrémité 16a du manchon 16 présente un profil non circulaire, lequel est rectangulaire dans le cas illustré.

Une configuration encore possible de l'extrémité 16a du manchon 16 est représentée à la figure 8. Le manchon 16 est pourvu d'une tête de boulon 24 constituant l'extrémité 16a et le dispositif anti-rotation, empêchant en même temps tout contact de l'autre extrémité du manchon 16 avec la paroi alésée du corps extérieur.

## Revendications

1. Suiveur de came avec poussoir (10) destiné à exécuter un mouvement alternatif dans un corps extérieur, le poussoir (10) comportant :
a. un corps de poussoir (12) présentant une surface cylindrique extérieure (12a) ;
b. un dispositif anti-rotation dépassant radialement la surface extérieure cylindrique (12a) du corps de poussoir (12) et s'engageant par une structure d'appariement dans ledit corps extérieur ;
c. un rouleau (14) assurant le contact avec une came ; et
d. un manchon (16) supportant à rotation le rouleau (14) dans le corps de poussoir (12) ;
le corps de poussoir (12) étant muni au moins d'un alésage latéral (18a, 18b) et le manchon (16) étant inséré dans ledit alésage (18a, 18b),
ledit dispositif anti-rotation étant une extrémité (16a) dudit manchon (16), **caractérisé en ce que**
la position axiale du manchon (16) à l'intérieur du corps de poussoir (12) est fixée par une déformation plastique du manchon en forme de tige (16),
la déformation plastique (22) du manchon est réalisée sur une portion axialement intermédiaire de la surface extérieure (22a) du manchon, de sorte que le manchon présente une portion en bout d'arbre (22b) constituant tout ou partie du dispositif anti-rotation.

2. Suiveur de came selon la revendication 1, **caractérisé en ce que** l'une des extrémités axiales du manchon (16) au moins est arrondie.

3. Suiveur de came selon la revendication 2, **caractérisé en ce que** l'une des extrémités axiales du manchon (16) au moins est pourvue d'un revêtement anti-frottement.

4. Suiveur de came selon la revendication 1, **caractérisé en ce que** la déformation plastique (22) du manchon est en appui contre une surface extérieure du corps de poussoir, afin de positionner axialement le manchon dans le ou les alésages (18a, 18b) du corps de poussoir (12).

5. Suiveur de came selon l'une quelconque des revendications précédentes, **caractérisé en ce que** l'extrémité (16a) du manchon (16) présente un profil non circulaire.

6. Suiveur de came selon l'une quelconque des revendications précédentes, **caractérisé en ce que** le manchon (16) est muni d'une tête de boulon constituant ledit dispositif anti-rotation.

7. Suiveur de came selon l'une quelconque des revendications précédentes, **caractérisé en ce que** le rouleau (14) est supporté sur le manchon (16) par un palier lisse, un palier à rouleau ou un roulement à aiguilles.

8. Suiveur de came selon l'une quelconque des revendications précédentes, **caractérisé en ce que** le corps de poussoir (12) est pourvu de deux alésages latéraux (18a, 18b) en regard l'un de l'autre, le manchon (16) étant inséré dans les alésages (18a, 18b).

9. Suiveur de came selon l'une quelconque des revendications précédentes, **caractérisé en ce que** le dispositif anti-rotation s'engage par une nervure axiale s'étendant sur toute la longueur de l'alésage de guidage dans le corps extérieur.

## Patentansprüche

1. Nockenfolger mit Stößel (10), welcher dafür vorgesehen ist, eine Hin- und Herbewegung in einem äußeren Körper auszuführen, wobei der Stößel (10) Folgendes aufweist:
a. einen Stößelkörper (12), welcher eine äußere zylindrische Fläche (12a) aufweist;
b. eine Verdrehsicherung, welche über die äußere zylindrische Fläche (12a) des Stößelkörpers (12) hervorragt und durch eine gepaarte Struktur in den äußeren Körper eingreift;
c. eine Rolle (14), welche den Kontakt mit einer Nocke gewährleistet; und
d. eine Hülse (16), welche die Rolle (14) zur Drehung in dem Stößelkörper (12) trägt;
wobei der Stößelkörper (12) mit mindestens einer seitlichen Bohrung (18a, 18b) versehen ist und die Hülse (16) in die Bohrung (18a, 18b) eingesetzt ist, wobei die Verdrehsicherung ein Ende (16a) der Hülse (16) ist,
**dadurch gekennzeichnet, dass**
die axiale Position der Hülse (16) im Inneren des Stößelkörpers (12) durch eine plastische Verformung der stabförmigen Hülse (16) festgelegt ist,
wobei die plastische Verformung (22) der Hülse über einen axial dazwischenliegenden Abschnitt der äußeren Fläche (22a) der Hülse ausgeführt ist, so dass die Hülse einen Wellenendabschnitt (22b) aufweist, welcher die ganze oder einen Teil der Verdrehsicherung bildet.

2. Nockenfolger nach Anspruch 1, **dadurch gekennzeichnet, dass** das eine der axialen Enden der Hülse (16) zumindest abgerundet ist.

3. Nockenfolger nach Anspruch 2, **dadurch gekennzeichnet, dass** das eine der axialen Enden der Hülse (16) zumindest mit einer reibungsarmen Beschichtung versehen ist.

4. Nockenfolger nach Anspruch 1, **dadurch gekennzeichnet, dass** die plastische Verformung (22) der Hülse sich an einer äußeren Fläche des Stößelkörpers abstützt, um die Hülse axial in der oder den Bohrungen (18a, 18b) des Stößelkörpers (12) zu positionieren.

5. Nockenfolger nach einem der vorhergehenden Ansprüche, **dadurch gekennzeichnet, dass** das Ende (16a) der Hülse (16) ein nicht kreisförmiges Profil aufweist.

6. Nockenfolger nach einem der vorhergehenden Ansprüche, **dadurch gekennzeichnet, dass** die Hülse (16) mit einem Schraubenkopf versehen ist, welcher die Verdrehsicherung bildet.

7. Nockenfolger nach einem der vorhergehenden Ansprüche, **dadurch gekennzeichnet, dass** die Rolle (14) auf der Hülse (16) durch ein Gleitlager, ein Rollenlager oder ein Nadellager gehalten ist.

8. Nockenfolger nach einem der vorhergehenden Ansprüche, **dadurch gekennzeichnet, dass** der Stößelkörper (12) mit zwei seitlichen, sich einander gegenüber liegenden Bohrungen (18a, 18b) versehen ist, wobei die Hülse (16) in den Bohrungen (18a, 18b) eingesetzt ist.

9. Nockenfolger nach einem der vorhergehenden Ansprüche, **dadurch gekennzeichnet, dass** die Verdrehsicherung durch eine axiale Rippe in Eingriff kommt, welche sich über die gesamte Länge der Führungsbohrung in dem äußeren Körper erstreckt.

## Claims

1. Cam follower including a plunger (10) intended to execute a reciprocating movement in an exterior body, the plunger (10) including:
a. a plunger body (12) having a cylindrical exterior surface (12a);
b. an anti-rotation device extending radially beyond the cylindrical exterior surface (12a) of the pusher body (12) and engaging via a matching structure in said exterior body;
c. a roller (14) providing the contact with a cam; and
d. a sleeve (16) rotatably supporting the roller (14) in the plunger body (12);
the plunger body (12) including at least one lateral bore (18a, 18b) and the sleeve (16) being inserted in said bore (18a, 18b),
said anti-rotation device being one end (16a) of said sleeve (16),
**characterized in that**
the axial position of the sleeve (16) inside the plunger body (12) is fixed by a rod shaped plastic deformation of the sleeve (16),
the plastic deformation (22) of the sleeve is on an axially intermediate portion of the exterior surface (22a) of the sleeve so that the sleeve has a shaft end portion (22b) constituting all or part of the anti-rotation device.

2. Cam follower according to Claim 1, **characterized in that** at least one of the axial ends of the sleeve (16) is rounded.

3. Cam follower according to Claim 2, **characterized in that** at least one of the axial ends of the sleeve (16) has an anti-friction coating.

4. Cam follower according to Claim 1, **characterized in that** the plastic deformation (22) of the sleeve bears against an exterior surface of the plunger body in order to position the sleeve axially in the bore or bores (18a, 18b) of the plunger body (12).

5. Cam follower according to any one of the preceding claims, **characterized in that** the end (16a) of the sleeve (16) has a non-circular profile.

6. Cam follower according to any one of the preceding claims, **characterized in that** the sleeve (16) includes a bolt head constituting said anti-rotation device.

7. Cam follower according to any one of the preceding claims, **characterized in that** the roller (14) is supported on the sleeve (16) by a smooth bearing, a roller bearing or a needle bearing.

8. Cam follower according to any one of the preceding claims, **characterized in that** the plunger body (12) includes two facing lateral bores (18a, 18b), the sleeve (16) being inserted in the bores (18a, 18b).

9. Cam follower according to any one of the preceding claims, **characterized in that** the anti-rotation device is engaged by means of an axial rib extending all the length of the guide bore in the exterior body.
